# EUROPEAN PATENT SPECIFICATION

(11) **EP 1 432 179 B1**
(45) Date of publication and mention of the grant of the patent: **19.03.2008**
(21) Application number: 02360348.3
(22) Date of filing: 16.12.2002
(51) Int. Cl.: H04L 12/56

(54) **Multi-channel network node and method for routing/switching data**
Mehrkanaliges Netzknoten und Verfahren zur Vermittlung/Leitweglenkung den Daten
Noeud de réseau et procédé pour routage/commutation de données

(43) Date of publication of application: 23.06.2004
(73) Proprietor: Alcatel Lucent, 75008 Paris (FR)
(72) Inventor: Körber, Wolfgang, 70329 Stuttgart (DE); Dembeck, Lars, 71032 Böblingen (DE)
(74) Representative: Knecht, Ulrich Karl

(56) References cited:
- EP-A- 0 918 419
- EP-A- 1 137 225
- US-A- 5 757 771
- HLUCHYJ M G ET AL: "QUEUEING IN HIGH-PERFORMANCE PACKET SWITCHING" IEEE JOURNAL ON SELECTED AREAS IN COMMUNICATIONS, IEEE INC. NEW YORK, US, vol. 6, no. 9, 1 December 1988 (1988-12-01), pages 1587-1597, XP002023972 ISSN: 0733-8716

## Description

The present invention relates to a multi-channel network node for routing/switching data from a number of input ports to a number of output ports, wherein said data is buffered in a memory unit before being passed to a destined output port. The invention also relates to a method for routing/switching data from any input port to any of a number of output ports of a multi-channel network node.

In specific network nodes of future networks, electronic memory components are running towards their limits where data buffering is mandatory, depending on the field of application. For instance, buffering might be necessary to assure quality of service during transmission link failures or node internal contention, or if data re-assembly has to be performed.

Due to ever increasing transmission rates of data channels, especially in wide area networks, huge amounts of data have to be handled in multi-channel/high capacity network nodes. Even the sheer amount of data to be buffered might exceed the manageable space and time boundary.

Today, for buffering and queuing purposes a shared memory (comprising a plurality of random access memory (RAM) blocks) is used, e.g. in electronic routing nodes, where single memory blocks/modules are spatially spread and connected with a data bus or local network, controlled by an appropriate processor. The buffer is implemented using a data structure with efficient algorithms and implementation techniques, running on a processor using a RAM.

The memory coherence is lost because the various in- and output channels have access to any memory block/module arbitrarily. The enter and remove functionality of a queue is mainly realized by changing pointers which represent single data portions, possibly coming from different input channels. Hence, received data in an input queue and destined to a certain output is spatially spread over various different physical memory blocks/modules, generally. This leads to relatively slow integral access times and high internal memory board activity (access, pointer handling, moving), especially when a queue consists of a very high number of data portions which are widely spread over different areas/memory modules of the whole shared memory. Therefore, the scalability of such shared memories is rather limited in terms of the number of queues, in-/output channels, and integral memory size.

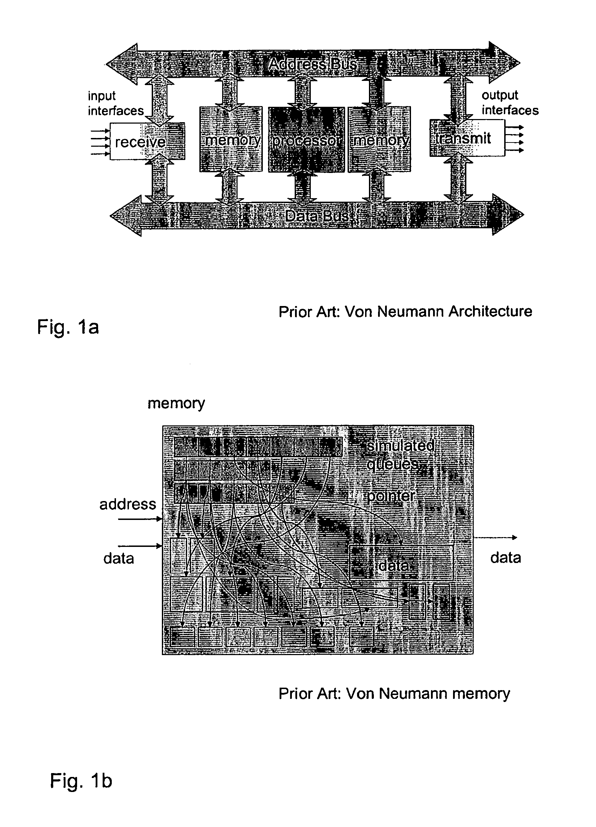

In Figs. 1a and 1b, a prior art network node for routing/switching data from an input side to an output side is schematically shown. This so-called "VON NEUMANN" shared memory architecture is, for example, used in simple electronic packet routers and switches. As already mentioned, the received data packets are stored in arbitrary memory cells within the memory module. The processor has to store the location of this data packet by means of a pointer. However, storing and handling pointers is complicated and time-consuming, particularly when handling huge amounts of data.

Further network nodes are disclosed e.g. in EP 0 918 419 A2 relating to an ATM switch or US 5,757,771 relating to a queue management or US 6 363 459, disclosing a microprocessor device.

In view of the above, it is an object of the present invention to improve the network node efficiency with respect to speed, capacity and scalability.

This object is solved by the multi-channel network node as mentioned above, wherein said memory unit is organized as a number of physical memory queues, each queue being assigned to an output port and comprising a number of coherent memory cells, and a switching unit for routing said data from the input port to said memory queue which is assigned to the destined output port wherein the number of memory cells is resizable in order to re-distribute buffer capacity of the memory queues.

The central idea of the present invention is to avoid the generic VON NEUMANN computer architecture and to realize the queues by hardware instead. In other words, the present invention really aligns queues physically in concrete memory blocks of a compact memory module towards single outputs (that is outputs of the network node, or outputs of any internal unit of the network node feeding further units, e.g. switching units) in order to get rid of speed constraints and scalability limitations and thus enhancing network node efficiency and throughput. Instead of a local bus or network (with various switches/interconnects) between single memory blocks/modules as used in a shared memory, a single switch unit is installed in front of the memory module to distribute/address data portions (e.g. TDM slots or IP packets) to the corresponding data memory output queues.

One of the main advantages of the present invention is that bottlenecks like busses and (indirect) indexed random memory access are avoided. Moreover, the multi-channel network node according to the present invention exhibits a much higher manageable capacity, less electronic board size, less complicated board layout and no timing and delay problems (latency) for on-board data routing than compared to a shared memory. This is due to a much higher degree of parallelization for example.

A further advantage is that the management of the memory is less complicated.

In a further preferred embodiment, the number of memory cells is resizeable in order to redistribute buffer capacity of the memory queues.

This means in other words, that the memory capacity allocated for each memory queue may be adjusted dynamically. The advantage of this measure is that the memory capacity can be allocated depending on actual traffic load of specific channels.

In a preferred embodiment, a re-assembly unit coupled with said input ports and said switching unit and a segmentation unit coupled with said memory unit and said output ports are provided.

In a further preferred embodiment, each memory queue is assigned to a memory agent controlling the operation of the memory queues. Preferably, said memory queues and said memory agents form said switching unit. More preferably, said memory queues and said memory agents operate asynchronous and in parallel.

These measures result in the advantage that the data handling is improved, particularly in terms of speed. Hence, the network node efficiency and throughput may be enhanced.

In a preferred embodiment, said switching unit is a switch matrix. Preferably, said switching unit is provided by a processor controlled by software. Further, it is preferred to provide input and output interfaces assigned to the input and output ports, respectively. Moreover, it is preferred to provide burst buffers.

These measures have been proven as advantageous with respect to the performance of the multi-channel network node.

The object of the present invention is also solved by a method for routing/switching data from an input port to any of a number of output ports of a multi-channel network node, comprising the steps:
- receiving data from a channel by a receiver unit;
- queuing said data in a plurality of memory queues constituting a memory unit; and
- switching/routing the data from the memory queues to the output port the respective memory queue is assigned to.

This method results in the same advantages as already described with respect to the multi-channel network node according to the present invention. Therefore, it is refrained from repeating same.

In a preferred embodiment, each memory queue allocates coherent memory cells.

The object of the present invention is also solved by a multi-channel routing/switching system which comprises a network of interactive cascaded multi-channel network nodes according to the present invention.

Further features and advantages can be taken from the following description and the enclosed drawings.

It is to be understood that the features mentioned above and those yet to be explained below can be used not only in the respective combinations indicated, but also in other combinations or in isolation, without leaving the scope of the present invention.

An embodiment of the invention is shown in the drawings and will be explained in more detail in the description below with reference to same. In the drawings:
- Figs. 1a and 1b: schematically show a prior art architecture of a network node and a memory organization;
- Fig. 2: is a schematic block diagram of the memory portion of a network node (memory device); and
- Fig. 3: is a schematic block diagram of a queue architecture.

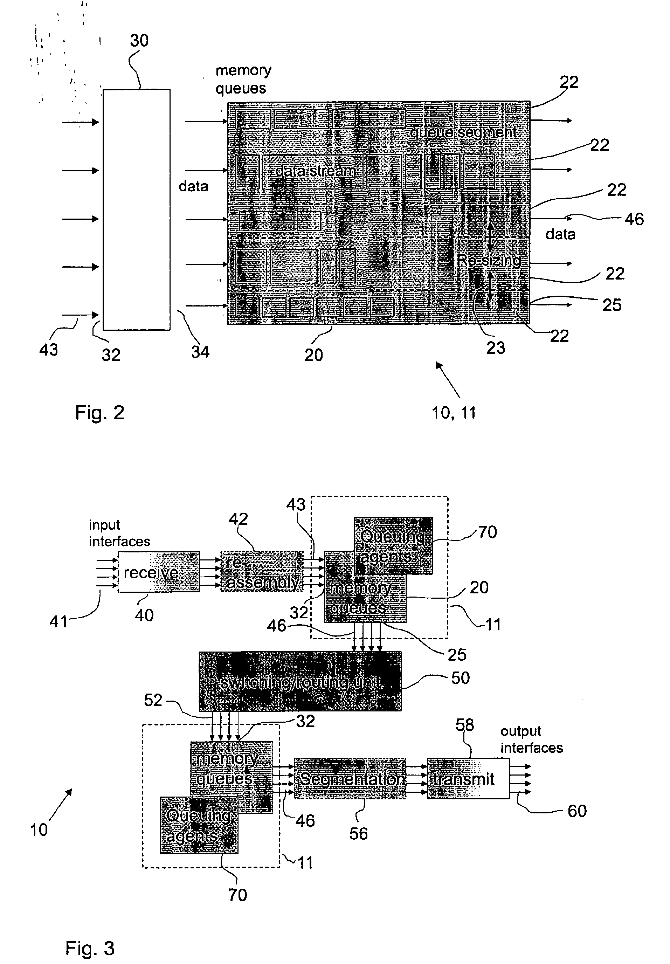

In Fig. 2, a detail, namely a memory device 11, of a multi-channel network node 10 is schematically shown and indicated with reference numeral 11. For clarity reasons, input and output interfaces are not shown in Fig. 2. The illustration of the network node focuses on its memory portion.

The memory device 11 comprises a memory unit 20 which is adapted to buffer data received by the input interfaces of the network node 10. This buffering of data is, for example, necessary in the event of a transmission link failure or node internal contention to avoid data losses or, for example, in the event that data reassembly has to be performed.

The memory unit 20 is supplied with the data to be buffered by a switching unit 30 which in turn receives data from the input interface (not shown). The switching unit 30 may, for example, be provided in form of a switch matrix.

The switching unit 30 comprises a predetermined number of input ports 32 and a corresponding number of output ports 34. Each input port 32 is connected with a data channel of the input interface.

The switching unit 30 serves to route the data received via an input port 32 to those output ports 34 which the data is destined for.

The memory unit 20 consists of a plurality of memory cells defining a total buffer capacity. As it is shown in Fig. 2, the memory unit 20 is organized such that memory queues 22 are formed. The number of the provided memory queues 22 corresponds to the number of channels of the network node 10 and the output ports 34 of the switching unit 30, respectively. Each memory queue 22 in turn is built up of a number of memory cells of the memory unit 20. In order to improve the performance of the memory unit 20, the memory cells building up a memory queue 22 are coherent memory cells in the memory unit 20. Generally, the total number of memory cells in the memory unit 20 is equally distributed to the memory queues 22.

However, the number of memory cells assigned to a memory queue 22 may be changed during operation. This resizing operation of a memory queue 22 is indicated by arrows 23. Since the total number of memory cells is fixed, a resizing of memory queues always results in an increase of memory cells of one memory queue and concurrently in a respective decrease of memory cells of another memory queue 22.

As already mentioned, the number of memory queues 22 corresponds to the number of output ports 34 of the switching unit 30. The reason is that each output port 34 is assigned to a memory queue 22 of the memory unit. This means in other words that the data stream supplied by an output port 34 is buffered in the corresponding memory queue 22.

Each memory queue 22 is coupled with an output port 25 of the memory unit 20 in order to supply the data buffered in a memory queue 22 to the output interface (not shown).

The function of this memory design is as follows:

The network node 10 receives via multiple channels different data streams or data channels. These data channels are supplied to the input ports 32 of the switching unit 30. Each data channel transports data (for example IP packets) which shall be routed to a destination output channel of the network node 10.

This routing function is provided by the switching unit 30 which analyses the data and directs the data to the desired (corresponding to the destination output channel) output port 34. The routing function is generally controlled by a switching/routing processor, which is however not shown in the figures.

The data supplied to an output port 34 of the switching unit 30 is transmitted to the respective memory queue 22 for buffering. Hence, the data buffered in one memory queue 22 corresponds to the data to be transmitted via a specific output channel of the network node 10. However, it is of course also possible that the data of at least two memory queues is switched to one output channel of the network node 10 or that in the reverse case the data of a single memory queue is switched to at least two output channels of the network node. In both cases an additional switching unit coupled with the output ports of the memory unit is provided.

The control of the memory unit 20 and the memory queues 22, respectively, is provided by a control unit, which is not shown in Fig. 2. This control unit particularly controls the read and write function of data and the resizing of the memory queues 22.

It is apparent from this description that the "queue" design of the memory unit 20 allows parallel processing of data buffering and avoids buffering of data in a shared memory. Hence, this solution avoids data access via a common bus. Rather, the data supplied to each memory queue 22 is processed separately and independently.

In Fig. 3, the network node 10 incorporating an implementation example of cascaded memory queues is schematically shown. The network node 10 comprises a receive unit 40 which receives the data from the plurality of data channels 41. The receive unit 40 is coupled with a reassembly unit 42 which is adapted to reassemble data and to supply the data via output lines 43 to the memory device 11.

The memory device 11 buffers the data supplied and transmits this data to a switching/routing unit 50 via output lines 46.

The switching/routing unit 50 routes the data to output lines 52 which are connected with input ports 32 of a further memory device 11. The output lines 46 of the memory device 11 are connected with a segmentation unit 56 which segments the data and supplies it to a transmit unit 58. The transmit unit 58 in turn transmits the data to output channels 60 of the network node 10.

In the shown network node 10 of Fig. 3, an additional switching/routing unit 50 is provided and serves to switch multiple queues per output of the memory device 11 (for example differentiated by priority level) to the second memory device 11.

In contrast to Fig. 2, the memory device 11 shown in Fig. 3 comprises queuing agents 70. These queuing agents are preferably provided as software modules and are adapted to control the memory queues 22 of the memory unit 20 and additionally the routing of data received via input ports 32 to the respective memory queues 22. Hence, the queuing agent 70 replaces the switching unit 30 and the memory control unit (not shown). The queuing agent 70 is assigned to a single memory queue 22, i.e. a memory device 11 comprises a number of such queuing agents 70 corresponding to the number of memory queues 22.

The switching/routing unit 50 might be implemented as smoothly cascaded queues or might be a separate switch fabric, like a cross-bar switch matrix.

To briefly summarize, the memory device 11 is a possible implementation of the idea to align the physical realization with the logical queue model. Queues are physically realized in concrete (cohesion) memory blocks of a compact memory unit towards inputs and outputs. The simple data flow through such queue allows higher speed because of less memory interaction. Timing constraints and scalability limitations are weaker and, thus, enhancing network node efficiency and throughput.

It is to be noted that the queuing scheme described above also applies to network edge node functions, where common data packets may be assembled from different data sources or client interfaces for further transmission.

## Claims

1. Multi-channel network node for routing/switching data from a number of input ports (32, 41) to a number of output ports (25, 60), wherein said data is buffered in a memory unit (20) before being passed to a destined output port, **characterized by**
said memory unit (20) being organized as a number of physical memory queues (22), each queue (22) being assigned to an output port (25) and comprising a number of coherent memory cells, and
a switching unit (30, 70) for routing said data from the input port to those memory queue (22) which is assigned to the destined output port (25), wherein the number of memory cells is resizable in order to re-distribute buffer capacity of the memory queues.

2. Multi-channel network node according to claim 1, **characterized by** a reassembly unit (42) coupled with said input ports of the network node and said switching unit (30, 70) and a segmentation unit coupled with said memory unit (22) and said output ports (60) of the network node.

3. Multi-channel network node according to claim 1, **characterized in that** each memory queue (22) is assigned to a memory agent (70) controlling the operation of the memory queue (22).

4. Multi-channel network node according to claim 3, **characterized in that** said memory queues (22) and said memory agents (70) form said switching unit (30).

5. Multi-channel network node according to claim 3 or 4, **characterized in that** said memory queues (22) and said memory agents (70) operate asynchronous and in parallel.

6. Multi-channel network node according to claim 1, **characterized in that** said switching unit (30) is a switch matrix.

7. Multi-channel network node according to claim 1, **characterized in that** said switching unit (30) is provided by a processor controlled by software.

8. Multi-channel network node according to claim, 1, **characterized by** input and output interfaces assigned to the input and output ports, respectively.

9. Multi-channel network node according to claim 1, **characterized in that** burst buffers are provided.

10. Multi-channel network node according to any of the preceding claims, **characterized in that** the output ports (25) are output ports of the memory unit (20) and are coupled with a switching unit.

11. Multi-channel network node according to any of claims 1 to 9, **characterized in that** the output ports (25) are the output ports of the network node (10).

12. Method for routing/switching data from any input port to any of a number of output ports of a multi-channel network node, comprising the steps:
receiving data from a data channel by a receiver unit;
queuing said data in a plurality of memory queues (22) constituting a memory unit (20), wherein each memory queue allocates coherent memory cells, and
switching/routing the data from the memory queues (22) to the output port (25, 60) the respective memory queue (22) is assigned to wherein the number of memory cells is resizable in order to re-distribute buffer capacity of the memory queues.

13. Multi-channel routing/switching system comprising a network of interactive cascaded multi-channel network nodes as claimed in any of claims 1 through 11.

## Patentansprüche

1. Mehrkanalnetzwerkknoten zum Weiterleiten/Vermitteln von Daten von einer Anzahl von Eingangs-Ports (32, 41) an eine Anzahl von Ausgangs-Ports (25, 60), wobei diese Daten in einer Speichereinheit (20) gepuffert werden, bevor sie an einen Zielausgangs-Port weitergeleitet werden, **gekennzeichnet durch**:
diese Speichereinheit (20), die als eine Anzahl physischer Speicherwarteschlangen (22) organisiert ist, wobei jede Warteschlange (22) einem Ausgangs-Port zugeordnet (25) ist und eine Anzahl zusammenhängender Speicherzellen umfasst,
eine Vermittlungseinheit (30, 70) zum Weiterleiten dieser Daten vom Eingangs-Port an diese Speicherwarteschlange (22), die dem beabsichtigten Ausgangs-Port (25) zugeordnet ist, wobei die Anzahl von Speicherzellen geändert werden kann, um die Pufferkapazität der Speicherwarteschlangen neu zu verteilen.

2. Mehrkanalnetzwerkknoten gemäß Anspruch 1, **gekennzeichnet durch** eine mit diesen Eingangs-Ports des Netzwerkknotens und dieser Vermittlungseinheit (30, 70) gekoppelte Wiederzusammensetzungseinheit (42) und eine mit dieser Speichereinheit (22) und diesen Ausgangs-Ports (60) des Netzwerkknotens gekoppelte Segmentierungseinheit.

3. Mehrkanalnetzwerkknoten gemäß Anspruch 1, **dadurch gekennzeichnet, dass** jede Speicherwarteschlange (22) einem Speicher-Agent (70) zugeordnet ist, der den Betrieb der Speicherwarteschlange (22) steuert.

4. Mehrkanalnetzwerkknoten gemäß Anspruch 3, **dadurch gekennzeichnet, dass** diese Speicherwarteschlangen (22) und diese Speicher-Agents (70) diese Vermittlungseinheit (30) bilden.

5. Mehrkanalnetzwerkknoten gemäß Anspruch 3 oder 4, **dadurch gekennzeichnet, dass** diese Speicherwarteschlangen (22) und diese Speicher-Agents (70) asynchron und parallel arbeiten.

6. Mehrkanalnetzwerkknoten gemäß Anspruch 1, **dadurch gekennzeichnet, dass** diese Vermittlungseinheit (30) eine Vermittlungsmatrix ist.

7. Mehrkanalnetzwerkknoten gemäß Anspruch 1, **dadurch gekennzeichnet, dass** diese Vermittlungseinheit (30) durch einen von einer Software gesteuerten Prozessor bereitgestellt wird.

8. Mehrkanalnetzwerkknoten gemäß Anspruch 1, **dadurch gekennzeichnet, dass** Eingangs- und Ausgangsschnittstellen den Eingangs- bzw. Ausgangs-Ports zugeordnet sind.

9. Mehrkanalnetzwerkknoten gemäß Anspruch 1, **dadurch gekennzeichnet, dass** Burst-Puffer bereitgestellt werden.

10. Mehrkanalnetzwerkknoten gemäß einem der vorangegangenen Ansprüche, **dadurch gekennzeichnet, dass** die Ausgangs-Ports (25) Ausgangs-Ports der Speichereinheit (20) und mit einer Vermittlungseinheit gekoppelt sind.

11. Mehrkanalnetzwerkknoten gemäß einem der vorangegangenen Ansprüche 1 bis 9, **dadurch gekennzeichnet, dass** die Ausgangs-Ports (25) die Ausgangs-Ports des Netzwerkknotens (10) sind.

12. Verfahren zum Weiterleiten/Vermitteln von Daten von einem beliebigen Eingangs-Port an eine beliebige Anzahl von Ausgangs-Ports eines Mehrkanalnetzwerkknotens, wobei das Verfahren die folgenden Schritte umfasst:
Empfangen von Daten aus einem Datenkanal durch eine Empfängereinheit;
Einreihen dieser Daten in eine Vielzahl von Speicherwarteschlangen (22), die eine Speichereinheit (20) bilden, wobei jede Speicherwarteschlange zusammenhängende Speicherzellen zuordnet, und Vermitteln/Weiterleiten von Daten aus den Speicherwarteschlangen (22) an die Ausgangs-Ports (25, 60), denen die entsprechenden Speicherwarteschlange (22) zugeordnet ist, wobei die Anzahl der Speicherzellen geändert werden kann, um die Pufferkapazität der Speicherwarteschlangen neu zu verteilen.

13. Mehrkanal-Weiterleitungs/Vermittlungssystem, das ein Netzwerk aus interaktiven kaskadierten Mehrkanal-Netzwerkknoten umfasst gemäß einem der Ansprüche 1 bis 11.

## Revendications

1. Noeud de réseau multicanal permettant le routage/la commutation de données d'un nombre de ports d'entrée (32, 41) à un nombre de ports de sortie (25, 60), dans lequel lesdites données sont mises en mémoire tampon dans une unité de mémoire (20) avant d'être transmis à un port de sortie, **caractérisé par**
ladite unité de mémoire (20) organisée sous la forme d'un nombre de files d'attente en mémoire physique (22), chaque file d'attente (22) étant affectée à un port de sortie (25) et comprenant un nombre de cellules mémoire cohérentes (22), et
une unité de commutation (30, 70) permettant le routage desdites données de port d'entrée à cette file d'attente en mémoire (22) qui est affectée au port de sortie destiné (25), dans lequel le nombre de cellules mémoire est redimensionnable afin de répartir de nouveau la capacité de mémoire tampon des files d'attente en mémoire.

2. Noeud de réseau multicanal selon la revendication 1, **caractérisé par** une unité de réassemblage (42) couplée auxdits ports d'entrée du noeud de réseau et à ladite unité de commutation (30, 70) et une unité de segmentation couplée à ladite unité de mémoire (22) et auxdits ports de sortie (60) du noeud de réseau.

3. Noeud de réseau multicanal selon la revendication 1, **caractérisé en ce que** chaque file d'attente en mémoire (22) est affectée à un agent de mémorisation (70) commandant le fonctionnement de la file d'attente en mémoire (22).

4. Noeud de réseau multicanal selon la revendication 3, **caractérisé en ce que** lesdites files d'attente en mémoire (22) et lesdits agents de mémoire (70) Forment ladite unité de commutation (30).

5. Noeud de réseau multicanal selon la revendication 3 ou 4, **caractérisé en ce que** lesdites files d'attente en mémoire (22) et lesdits agents de mémoire (70) fonctionnent de façon asynchrone et en parallèle.

6. Noeud de réseau multicanal selon la revendication 1, **caractérisé en ce que** ladite unité de commutation (30) est une matrice de commutation.

7. Noeud de réseau multicanal selon la revendication 1, **caractérisé en ce que** ladite unité de commutation (30) est fournie par un processeur commandé par logiciel.

8. Noeud de réseau multicanal selon la revendication 1, **caractérisé par** des interfaces d'entrée et de sortie affectées aux ports d'entrée et de sortie et, respectivement.

9. Noeud de réseau multicanal selon la revendication 1, **caractérisé en ce que** des tampons pour les rafales sont fournis.

10. Noeud de réseau multicanal selon l'une quelconque des revendications précédentes, **caractérisé en ce que** les ports de sortie (25) sont des ports de sortie de l'unité de mémoire (20) et sont couplés à une unité de commutation.

11. Noeud de réseau multicanal selon l'une quelconque des revendications 1 à 9, **caractérisé en ce que** les ports de sortie (25) sont des ports de sortie du noeud de réseau (10).

12. Procédé permettant le routage/la commutation des données d'un quelconque port d'entrée à un quelconque d'un nombre de ports de sortie d'un noeud de réseau multicanal, comprenant les étapes suivantes :
recevoir des données d'un canal de données par une unité de réception ;
mettre en file d'attente lesdites données dans une pluralité de files d'attente en mémoire (22) constituant une unité de mémoire (20), dans lequel chaque file d'attente en mémoire affecte des cellules mémoire cohérentes, et
commuter/router les données des files d'attente en mémoire (22) au port de sortie (25, 60) auquel la file d'attente en mémoire respective (22) est affectée, dans lequel le nombre de cellules mémoire est redimensionnable afin de répartir de nouveau la capacité de mémoire tampon des files d'attente en mémoire.

13. Système de routage/commutation multicanal comprenant un réseau de noeuds de réseau multicanal en cascade interactifs 11 selon l'une quelconque des revendications 1à 11.
